# FASCICULE DE BREVET EUROPEEN

(11) **EP 1 317 840 B1**
(45) Date de publication et mention de la délivrance du brevet: **16.08.2006**
(21) Numéro de dépôt: 01969860.4
(22) Date de dépôt: 10.09.2001
(51) Int. Cl.: H04L 29/06, H04L 12/58

(54) **PROCEDE POUR GENERER LES PREUVES DE L'ENVOI ET DE LA RECEPTION PAR UN RESEAU DE TRANSMISSION DE DONNEES D'UN ECRIT ELECTRONIQUE ET DE SON CONTENU**
VERAHREN ZUR ERZEUGUNG VON NACHWEISEN ÜBER DAS SENDEN UND EMPFANGEN EINES ELEKTRONISCHEN SCHREIBENS UND SEINES INHALTES ÜBER EIN NETZWERK
METHOD FOR PRODUCING EVIDENCE OF THE TRANSMITTAL AND RECEPTION THROUGH A DATA TRANSMISSION NETWORK OF AN ELECTRONIC DOCUMENT AND ITS CONTENTS

(30) Priorité: 13.09.2000 FR 0011658
(43) Date de publication de la demande: 11.06.2003
(73) Titulaire: Vasseur, François-Joseph, 75011 Paris (FR)
(72) Inventeur: Vasseur, François-Joseph, 75011 Paris (FR)
(74) Mandataire: Rémont, Claude
(86) Numéro de dépôt international: PCT/FR2001/002801
(87) Numéro de publication internationale: WO 2002/023863

(56) Documents cités:
- WO-A-98/17042
- CERVENINI, G.; CHESI, M; FANTAUZZI, G.: "A multiprovider, universal, e-mail service for the secure exchange of legally-binding multimedia documents" EUROCOMM 2000. INFORMATION SYSTEMS FOR ENHANCED PUBLIC SAFETY AND SECURITY. IEEE/AFCEA, [en ligne] - 17 mai 2000 (2000-05-17) pages 47-50, XP002178670 Finsiel, Italy ISBN: 0-7803-6323-X Extrait de l'Internet: <URL:http.//ieeexplore.ieee.org> [extrait le 2001-09-27]

## Description

La présente invention concerne un procédé pour générer les preuves de l'envoi et de la réception par réseau de transmission de données (par fil de cuivre, fibre optique, hertzien, câblé ou tout autre support équivalent, tel que, par exemple, Internet) d'un écrit électronique et de son contenu. Un tel procédé est connu du document CERVENINI, G.; CHESI, M; FANTAUZZI, G.: "A multiprovider, universal, e-mail service for the secure exchange of legally-binding multimedia documents" EUROCOMM 2000. INFORMATION SYSTEMS FOR ENHANCED PUBLIC SAFETY AND SECURITY. IEEE/AFCEA, [Online] - 17 mai 2000 (2000-05-17) pages 47-50, XP002178670 Finsiel, Italy ISBN: 0-7803-6323-X Extrait de l'Internet: URL:http.//ieeexplore.ieee.org> [extrait le 2001-09-27].Insert page 1 à 3

Selon l'état de la technique antérieure, pour obtenir la preuve littérale de l'envoi et de la réception d'un écrit (tel qu'un acte sous seing privé, une lettre ou écrit recommandé, acte authentique d'un officier public), il est nécessaire de transcrire l'écrit sur un support papier et d'utiliser un réseau de distribution propre à ce support et les modes de preuve sont nécessairement tributaires de ce support et de ses contraintes (déplacements physiques, coûts, lenteur). Il n'existe pas de procédé de preuve électronique, notamment de nature conventionnelle, ni de procédé d'écrits recommandés sous forme électronique et aucune des solutions traditionnelles ne permet de remplir, à la différence du présent procédé, les conditions de validité d'une convention de preuve, d'un recommandé légal ou d'un acte authentique, formalisé notamment par un accusé électronique de réception ou de mise à disposition sur des écrits électroniques et/ou fichiers informatiques en la forme d'un double certificat certifié, sans déplacement physique, de manière quasi instantanée et constamment accessible.

Le présent procédé permet de se passer du support papier pour générer des preuves littérales recevables en justice ayant la valeur d'une présomption simple, conventionnelle ou irréfragable, pouvant en outre valoir recommandé légal ou acte authentique selon la qualité du tiers certificateur. Ce procédé utilise notamment la cryptologie selon une organisation particulière de ses applications, que sont la transmission de données et la création de sites et portail sous mode sécurisé, les signatures électroniques avancées et les certificats qualifiés.

Synthétiquement, le présent procédé de preuve 1/ génère la preuve littérale de la transmission par réseau à date certaine et du dépôt auprès d'une autorité de certification d'un écrit électronique sous la forme d'un certificat qualifié et de l'enregistrement de son contenu et de ses fichiers joints sur un support inaltérable, durable et non modifiable, 2/ transmet cet écrit en mode recommandé portant sa propre signature électronique avancée créée selon un procédé fiable d'identification par l'autorité de certification, celle-ci garantissant le lien entre ladite signature et l'écrit, ainsi que sa transmission dans des conditions normales au destinataire indiqué, et 3/ obtient la preuve littérale de la mise à disposition de cet écrit auprès du destinataire, formalisée par un accusé de mise à disposition émis par ladite autorité, et, en cas d'acceptation par le destinataire, la preuve conventionnelle et irréfragable de la réception par le destinataire de l'écrit et de son contenu formée par un double certificat qualifié émis à date certaine par l'autorité de certification et garanti par elle contenant les signatures des deux parties, cette preuve étant formalisée en un accusé de réception électronique remis par réseau à l'Expéditeur.

En droit français, le présent procédé permet de créer soit une preuve littérale au sens de l'article 1316-1 du Code civil et reconnu en justice sous réserve, en cas de conflit, de l'appréciation de l'Autorité judiciaire, soit, en cas d'acceptation de l'écrit par son destinataire, l'application d'une convention de preuve s'imposant à l'Autorité judiciaire en application de l'article 1316-2 du même code, garantie par un tiers, et dans le cadre d'une mission de service publique, ledit procédé constitue un écrit recommandé au sens légal du terme (exemple : art. L. 122-14 du Code du Travail : convocation à l'entretien préalable *"par lettre recommandée (L. n°86 1320 du 30 décembre 1986)",* Code de la Propriété Intellectuelle, Code de procédure pénale (notification des ordonnances d'un Juge d'Instruction), Code des télécommunications, etc.). Lorsque le procédé objet du brevet est organisé, mis en oeuvre et garanti par une entité ayant la qualité d'un officier public, les Accusés de réception ou de mise à disposition font foi jusqu'à procédure d'inscription de faux, civile ou pénale, à la différence des présomptions simples dont on peut apporter la preuve contraire. En un tel cas, le produit du présent procédé de recommandation, dit en ce cas recommandation authentique, a la valeur d'un acte authentique.

En droit communautaire, et notamment au regard de la Directive CEE du Parlement et du Conseil *sur un cadre communautaire pour les signatures électroniques* du 13 décembre 1999 (ci-après la Directive), le présent procédé, mis en oeuvre par une autorité de certification (ou prestataire de service de certification au sens de l'article 2 (11) et intégrant un dispositif sécurisé de création et de vérification de signature électronique avancée au sens de l'article 2 (2, 6 et 8), produit un double certificat qualifié au sens de l'article 2 (10) de la Directive et, en application de l'article 5 (b), recevable devant les juridictions des Etats-membres portant sur les caractéristiques de l'envoi et du contenu d'un écrit électronique signé de l'expéditeur ainsi que sur sa-réception attestée par le destinataire ou sa mise à disposition attestée par l'autorité de certification..

Le procédé, selon l'invention est indiqué dans la revendication 1 et est caractérisé en ce qu'il comprend les étapes et définitions suivantes, étant rappelé que les termes débutant par une majuscule renvoient aux définitions en fin de description :
1. Connexion
   1.1. L'Expéditeur qui souhaite obtenir la preuve de l'envoi et de la réception d'un écrit électronique se connecte au Site à partir d'un poste de travail, ayant préalablement mis sous la forme d'un fichier de traitement de texte informatique, l'écrit électronique qu'il souhaite transmettre en mode recommandé, de même que les éventuels fichiers à joindre à l'envoi.
   1.2. Dès sa connexion, l'Expéditeur est averti que l'intégralité du site sur lequel il s'apprête à rentrer est en mode sécurisé et que les informations recueillies dans le cadre de ce service de recommandation sont nécessaires et soumises à la législation protectrice de la CNIL.
2. Accueil
   2.1. Fonctionnellement, l'Expéditeur peut avoir accès, par lien hypertexte, à (i) une notice d'information générale sur le service de recommandation avec les Conditions D'usage sans fonction d'acceptation et une base de Foire aux Questions ou "FAQ", (ii) l'annuaire du service, (iii) renseignements sur l'Autorité de certification et ses partenaires, (iv) la fonction de Recommandation "Envoi d'un e-mail recommandé", (v) la fonction de Révocation "Révocation de Signature d'identité", (vi) la fonction de création d'une Signature d'identité et de modification des caractéristiques d'une Signature d'identité, (vii) le coût du service de recommandation et (viii) l'environnement légal et la valeur juridique de la recommandation.
      Il est renvoyé aux Définitions pour le contenu des fonctions.
   2.2. Pour envoyer un e-mail recommandé, l'Expéditeur, en cliquant sur le lien "Envoi d'un e-mail en recommandé", est dirigé vers la page "Envoi d'un e-mail en recommandé".
3. Envoi d'un e-mail recommandé
   3.1. Identification de l'Expéditeur.
      Selon qu'il s'agit soit d'un Expéditeur non référencé (3.1.1.), soit d'un Usager, donc possédant une Signature d'Identité (3.1.2.), la personne est dirigée vers la qualité adéquate, en lui proposant de sélectionner le lien hypertexte correspondant.
      3.1.1. Expéditeur non référencé : processus de Création de sa Signature d'identité (renvoi aux Définitions).
      3.1.2. Usager disposant d'une Signature d'Identité. Il est précisé qu'il est possible de placer un lien sur cette page directement depuis la page d'accueil. L'Usager rentre les coordonnées de sa Signature d'identité, à savoir numéro de référence de la Signature d'identité et mot de passe. Les informations correspondantes sont affichées et l'Usager est invité à informer l'Autorité de toute modification ultérieure. En cas de modification, il est procédé à une nouvelle validation des données identifiantes de la même façon que lors de la Création de la Signature d'identité (renvoi aux Définitions).
   3.2. Création de l'e-mail recommandé.
      S'effectue au moyen d'un formulaire en deux parties, l'une concernant le Destinataire (3.2.1.) et l'autre relative au contenu de l'e-mail recommandé, ses fichiers joints et les caractéristiques de la recommandation (3.2.2.).
      3.2.1. Identification du Destinataire : l'Autorité demande l'adresse électronique du Destinataire et la vérifie d'une part au sein de son Annuaire et d'autre part, le cas échéant, auprès de la base de données de l'hébergeur de cette adresse ou de toute base de données utile. En cas d'erreur ou d'impossibilité de référencer le destinataire, un message d'erreur est indiqué à l'Usager et lui propose les solutions possibles : vérification de l'adresse qui lui a été indiquée, autre référencement ou autre recherche sur tout site ou bases de données ou abandon et retour à l'accueil (2.1). Le processus se poursuit jusqu'à ce que le Destinataire ait été localisé. Il est précisé en tant que de besoin que ce dernier n'est pas, à ce stade, contacté par l'Autorité.
      3.2.2. Contenu de l'e-mail recommandé : Il est proposé à l'Expéditeur soit d'écrire directement dans le cartouche à cet effet l'écrit qu'il souhaite recommander, soit de le transmettre en fichier traitement de texte ou en procédant à la fonction copier puis coller et auquel cas ledit texte est affiché sur le même cartouche et susceptible de nouvelles modifications. Lorsque les éventuelles modifications sont achevées, l'Expéditeur peut insérer dans un autre cartouche les fichiers qu'il entend joindre à son envoi, ceux-ci s'affichant par leur nom complet. Par la suite, il est demandé à l'Expéditeur s'il souhaite un retour par courrier postal de l'Accusé de réception et l'Avis de Passage.
   3.3. Validation, facturation et paiement du service.
      3.3.1. Validation : Ces opérations achevées, l'Expéditeur les valide intégralement ainsi que les Conditions d'usages en apposant sa Signature d'Identité et ces données sont enregistrées par l'Autorité de certification sur une base de données doublée d'un enregistrement sur une base miroir (cluster).
      3.3.2. Facturation : l'Autorité de certification calcule le montant dont est redevable l'usager pour la prestation de recommandation en fonction des caractéristiques de l'e-mail recommandé sur la base des coûts affichés sur la page d'accueil, et en affiche le résultat. L'Expéditeur peut encore à ce stade refuser la facture et annuler l'ensemble du processus de recommandation, sans que cette annulation comprenne la Signature d'Identité, distincte du processus, mais pour laquelle il est proposé de procéder à sa Révocation si tel est le souhait de l'Usager. En acceptant la facturation, l'Expéditeur est dirigé, selon son choix, soit vers le site de paiement sécurisé pour un paiement immédiat (3.3.3.1.), soit vers un engagement de paiement différé (3.3.3.2.).
      3.3.3. Paiement.
         3.3.3.1. Paiement en ligne immédiat : site sécurisé tenu par un établissement autorisé au sens de la loi bancaire, fonctionnant à partir du numéro et de la date de validité d'une carte bancaire.
         3.3.3.2. Engagement de paiement différé : l'Expéditeur s'engage à régler la somme due dans le délai spécifié, sous la forme soit de chèque, soit d'espèce, soit par virement bancaire, et appose sa Signature d'identité sur cet engagement.
   3.4. Enregistrement et référencement de l'e-mail recommandé et Transmission de l'Accusé de dépôt.
      3.4.1. Enregistrement définitif : l'Autorité enregistre sur sa base de données l'intégralité des informations recueillies sur un support inaltérable, durable et non modifiable et procède au même enregistrement sur une base de donnée miroir présentant les mêmes caractéristiques de sécurité, mais hors connexion.
      3.4.2. Création d'un numéro de référencement de l'e-mail recommandé, transmis à l'Expéditeur dans l'Accusé de dépôt.
      3.4.3. Création de l'Accusé de dépôt (voir Définitions) et transmission à l'Expéditeur.
   3.5. Envoi au destinataire.
      3.5.1. Création de l'Avis de Passage : l'Autorité de certification crée un e-mail sécurisé portant sa signature et valant certificat, prenant la forme d'un message électronique.
      3.5.2. L'Avis de Passage est envoyé au Destinataire par réseau Internet, à savoir par des intermédiaires répondant à des normes de sécurité de transmission satisfaisante ou, le cas échéant, par l'Autorité de certification elle-même.
4. Information et création des Accusés de réception ou de Mise à disposition.
   4.1. Information : le Destinataire reçoit dans la boite aux lettres électronique un message de type e-mail indiqué comme étant d'une importance haute et sécurisé, nommé "Avis de passage relatif à un e-mail recommandé" et adressé exclusivement au Destinataire, titulaire de cette adresse électronique, et signalé par une icône représentant le logo de l'Autorité ou de son délégataire. En cliquant sur ce courrier électronique, le destinataire est informé de ce qu'il est destinataire d'un e-mail recommandé qui est à sa disposition sur le Site de l'Autorité avec son lien hypertexte, qu'il peut soit obtenir des informations en cliquant sur "en savoir plus"(4.2.), soit accepter le message en cliquant sur "Accepter l'e-mail recommandé" (4.3.), soit le refuser en cliquant sur "refuser l'e-mail recommandé" (4.4.).
   4.2. Informations complémentaires : Il est expliqué au Destinataire d'une part l'objet et le statut du service de recommandation, d'autre part l'alternative qui lui est proposée, à savoir :
      - soit accepter l'e-mail recommandé et disposer à cette fin d'une signature d'Identité gratuitement qu'il pourra réutiliser pour authentifier ses messages, en précisant que l'acceptation de l'e-mail recommandé emporte autorisation expresse pour l'Autorité de certification de faire état, dans un Accusé de réception, de l'acceptation pleine et entière, à date certaine, du contenu de l'écrit et de ses annexes par le Destinataire, auprès de l'Expéditeur, de conserver ces informations pendant 30 ans et de les communiquer sur décision de justice.
      - soit refuser l'e-mail recommandé et auquel cas il lui sera indiqué que cet écrit recommandé peut être accepté pendant un délai d'ouverture de deux semaines, à l'expiration duquel il lui sera envoyé un Avis de Mise à disposition à compter duquel il sera présumé avoir eu connaissance de l'écrit recommandé rétroactivement depuis la date de l'Avis de passage. En tout état de cause, l'écrit en recommandé reste à sa disposition et peut toujours être accepté et ouvert après le Délai d'ouverture, mais sous condition de reconnaître expressément la validité de la date de réception au jour de l'Avis de passage.
         Enfin, il lui est proposé un lien direct vers l'Accueil du Site et vers la Notice d'informations du Site.
   4.3. Acceptation de l'e-mail recommandé :
      Le Destinataire clique sur l'icône "accepter l'e-mail recommandé" et atteint la page du Site relative à l'Acceptation des e-mail recommandés, sur laquelle il doit indique s'il est un Usager et dispose déjà de sa Signature d'Identité (4.3.1.) ou s'il n'en dispose pas (4.3.2.), avant d'être dirigé vers la page "Création de l'Accusé de réception" (4.3.3.).

      4.3.1. Le Destinataire est un Usager : il lui est demandé d'indiquer le numéro de sa Signature d'identité et son code secret. L'Autorité vérifie ces informations sur sa base de données. Si la vérification est satisfaisante, le Destinataire est envoyé à la page de création de l'Accusé de réception.
      4.3.2. Création de la Signature d'identité du destinataire : le Destinataire est envoyé vers la page Création d'une Signature d'identité (renvoi aux Définitions) similaire au 3.1.1. A l'issue, le destinataire, devenu parallèlement Usager et ayant accepté les Conditions d'usage, passe sur la page Création de l'Accusé de réception.
      4.3.3. Création de l'Accusé de réception : Formulaire sur lequel s'affichent les caractéristiques du destinataire et le numéro de référence de l'e-mail recommandé. A ce stade il est encore possible d'annuler le processus d'acceptation et, le cas échéant, la Signature d'identité crée par le service de révocation. Au vu de ce formulaire, le Destinataire accepte définitivement et irrévocablement l'e-mail recommandé en apposant sa Signature d'identité, conformément à la convention de preuve contenue dans les Conditions d'usage acceptées lors de la création de la Signature d'identité.
      4.3.4. Enregistrement définitif de l'Accusé de réception : l'Autorité enregistre sur sa base de données l'intégralité des informations recueillies sur un support inaltérable, durable et non modifiable et procède au même enregistrement sur une base de donnée miroir présentant les mêmes caractéristiques de sécurité, mais hors connexion.
      4.3.5. Ouverture de l'e-mail recommandé par le Destinataire, ce dernier pouvant le télécharger sur son poste de travail s'il le souhaite, étant précisé que l'écrit recommandé restera consultable auprès de l'Autorité de certification en indiquant le n° de référence du recommandé et la Signature d'identité du Destinataire.
   4.4. Refus de l'e-mail recommandé
      4.4.1. Refus : Le Destinataire qui ne souhaite par accepter l'e-mail recommandé peut cliquer sur l'icône "refuser l'e-mail recommandé". L'Autorité délivre automatiquement un message l'informant : (1) de la faculté d'accepter ultérieurement pendant le délai d'ouverture de 15 jours à compter de l'envoi de cet Avis, et indiquant que l'écrit reste pour ce faire à sa disposition sur le Site de l'Autorité de certification, (2) qu'en tout état de cause, à l'expiration de ce délai d'ouverture, il lui sera envoyé un Accusé de Mise à Disposition à compter duquel il sera réputé avoir eu connaissance dudit e-mail recommandé qui restera néanmoins à sa disposition.
      4.4.2. Absence d'ouverture : après l'expiration du délai d'ouverture, envoi de l'Avis de Mise à Disposition du 4.4.3. Sur demande, option possible de contact du destinataire par d'autres moyens ou d'attestation par les intermédiaires chargés de la transmission.
      4.4.3. Emission de l'Avis de Mise à Disposition : A l'expiration du Délai d'ouverture, l'Autorité envoie un Avis de Mise à Disposition réitérant les termes de l'Avis de Passage, mais déclarant le Destinataire réputé avoir eu connaissance de l'e-mail recommandé rétroactivement à compter de la date de l'Avis de passage et que cette présomption sera formalisée dans un Accusé de Mise à disposition délivré à l'Expéditeur et recevable en justice en tant que preuve littérale.
   4.5. Création par l'Autorité de certification de l'Accusé de Mise à disposition de l'écrit électronique : l'Autorité de certification, dans un premier temps, enregistre sur sa base de données l'intégralité des informations recueillies sur un support inaltérable, durable et non modifiable et procède au même enregistrement sur une base de données miroir présentant les mêmes caractéristiques de sécurité, mais hors connexion et, dans un deuxième temps, émet à partir de ces informations qu'il atteste, un certificat qualifié simple constituant l'Accusé de Mise à Disposition. Cet Accusé peut mentionner, le cas échéant, un refus exprès du Destinataire d'accepter le mail recommandé.
5. Envoi de l'Accusé de Réception ou de Mise à disposition.
   5.1. Accusé de réception : L'Autorité de certification transmet par réseau à l'Expéditeur l'Accusé de réception (voir Défmitions), éventuellement doublée, sur commande spécifique, d'un envoi par courrier postal ou par télécopie.
   5.2. Accusé de Mise à Disposition : L'Autorité de certification transmet par réseau à l'Expéditeur l'Accusé de Mise à Disposition (voir Définitions), éventuellement doublé d'un envoi par courrier postal ou télécopie.

### Fin du procédé de recommandation.

Pour les besoins du présent brevet sont applicables les définitions suivantes auxquelles renvoient les termes débutant par une majuscule :
Accusé de réception électronique : désigne la preuve recevable en justice de ce que le destinataire d'un e-mail recommandé en a accepté expressément la réception, acceptation formalisée par l'apposition de sa Signature d'identité. La valeur de cette preuve repose sur une convention de preuve préalablement contractée dans un cadre organisé et/ou contrôlé par une Autorité de certification et, dans le présent procédé de preuve, insérée dans les Conditions d'usages.
   Formellement, cet accusé de réception se présente sous la forme d'un e-mail ou message électronique constitué d'un double certificat qualifié, généré par l'Autorité de certification et comportant (1) l'écrit recommandé et ses fichiers joints correspondant à l'Avis de passage (premier certificat qualifié contenant la convention de preuve signée par l'Expéditeur), (2)l'Accusé de réception électronique en tant que tel comportant la Signature d'identité du destinataire rattaché irrévocablement audit écrit (second certificat qualifié, double du second mais comportant en outre la même convention de preuve signée cette fois par le Destinataire) et (3) le certificat de l'Autorité de certification portant sur ce double certificat (1+2) et, le cas échéant, son Certificat public. Sur demande, l'Accusé de réception est doublé d'un envoi papier avec signature manuscrite d'un représentant habilité de l'Autorité.
   Valeur juridique : En droit français, l'Accusé de réception électronique, tel que généré par le présent procédé, est une preuve établie en application d'une convention de preuve qui s'impose à l'Autorité judiciaire et à laquelle il ne peut être apporté la preuve contraire, notamment en raison de la renonciation à contester le procédé de recommandation qui constitue l'obligation principale de la convention de preuve. En droit communautaire et notamment en application de la Directive, l'Accusé de réception électronique se compose de deux certificats qualifiés au sens de l'article 2 (10) de la Directive, recevable devant les juridictions des Etats-membres en application de l'article 5 (b) de la Directive.
Accusé de dépôt : désigne le Certificat qualifié simple crée par l'Autorité de certification garantissant toutes les caractéristiques de l'e-mail recommandé (dont l'écrit, le destinataire, la convention de preuve et signature de l'Expéditeur), enregistré de manière à en garantir l'intégrité sur un support fiable, durable et infalsifiable, selon le meilleur état de la technique. Cet Accusé de dépôt est transmis à l'Expéditeur par voie électronique et tenu à sa disposition ou à celle de la Justice pour valoir preuve du contenu à date certaine du dépôt d'un envoi recommandé et ses caractéristiques.
Accusé de Mise à disposition : consécutif à l'Avis de Mise à Disposition, désigne la preuve que le destinataire a été mis en mesure d'accepter et donc d'accéder à l'écrit recommandé pour prendre connaissance de son contenu. Cet Accusé de Mise à Disposition, certificat qualifié simple, fait courir une présomption simple de connaissance de l'écrit par le destinataire à compter rétroactivement de l'Avis de passage. L'Accusé de Mise à Disposition est transmis au destinataire de la même manière que l'Accusé de réception. L'Accusé de Mise à Disposition peut comprendre en outre, le cas échéant : (1) l'indication du refus exprès par le Destinataire du recommandé démontrant qu'il était en mesure de l'accepter et (2) l'attestation des intermédiaires concernés par la transmission de la bonne transmission de l'Avis de passage jusqu'à l'adresse électronique du Destinataire.
   Valeur juridique : En droit français, l'Accusé de Mise à disposition est une preuve littérale au sens de l'article 1316-1 du Code civil, recevable en justice et ayant la valeur d'une présomption simple contre laquelle la preuve contraire peut être apportée. En droit communautaire et notamment en application de la Directive, l'Accusé de réception électronique, qui se compose d'un seul certificat qualifié au sens de l'article 2 (10) de la Directive, est recevable devant les juridictions des Etats-membres en application de l'article 5 (b) de la Directive.
Avis de Mise à Disposition : désigne la réitération de l'Avis de Passage, auquel s'ajoute un avertissement clair sur les conséquences du refus d'ouverture, notamment concernant la présomption de connaissance. Préalable à l'Accusé de Mise à disposition, il clôt le délai d'ouverture et déclenche la présomption simple de connaissance depuis la date d'envoi de l'Avis de Passage.
   Valeur juridique : En droit français, l'Avis de Mise à disposition est une preuve littérale au sens de l'article 1316-1 du Code Civil, attestée par un tiers, et recevable en justice mais n'ayant que la valeur d'une présomption simple contre laquelle la preuve contraire peut être apportée. En droit communautaire, et notamment au regard de la Directive, ledit Avis est un certificat qualifié au sens de l'article 2 (10) de la Directive , recevable devant les juridictions des Etats-membres en application de l'article 5 (b) de la Directive.
Avis de passage électronique : désigne l'e-mail envoyé au Destinataire par réseau Internet, à savoir par des intermédiaires répondant à des nonnes de sécurité de transmission satisfaisante ou, le cas échéant, par l'Autorité de certification elle-même. L'Avis de passage est signé électroniquement par l'Autorité de certification au Destinataire. Cet e-mail est indiqué comme étant d'une importance haute et se distingue notamment par une icône représentant un signe distinctif de l'Autorité.
   En cliquant sur ce courrier électronique, le destinataire est informé de ce qu'il est destinataire d'un e-mail recommandé qui est à sa disposition sur le Site de l'Autorité avec son lien hypertexte, qu'il peut soit obtenir des informations (se reporter au 4.2. de la Description), soit accepter le message (se reporter au 4.3. de la description), soit le refuser (se reporter au 4.4. de la description), ces différents choix correspondant à des liens hypertextes vers les pages du Site concernées.
   Valeur juridique : fixe la date du début du Délai d'ouverture et, consécutivement à l'Avis de Mise à Disposition, marque le point de départ de la présomption de connaissance.
   En droit français, l'Avis de Passage est une preuve littérale attestée par un tiers au sens de l'article 1316-1 du Code Civil recevable en justice mais n'ayant que la valeur d'une présomption simple contre laquelle la preuve contraire peut être apportée. En droit communautaire, et notamment au regard de la Directive, ledit Avis est un certificat qualifié au sens de l'article 2 (10) de la Directive, recevable devant les juridictions des Etats-membres en application de l'article 5 (b) de la Directive.
Autorité de certification : désigne l'entité qui organise et garantit le présent procédé de preuve, et plus particulièrement la véracité des informations contenues dans les instruments produits, à savoir la Signature d'Identité, l'Avis de dépôt, l'Avis de passage, l'Avis de Mise à Disposition et les Accusés soit de réception, soit de Mise à disposition par l'émission de certificats qualifiés simples et/ou doubles relatifs aux actes concernés.
   L'Autorité de certification organise la création et la vérification des Signatures d'identité par un dispositif sécurisé de création et de vérification assurant la fiabilité de l'identification' du titulaire, l'enregistrement et l'archivage selon des procédés sécurisés et sur un support durable et inaltérable dont il garantit l'intégrité, des e-mails recommandés et de leur contenu, le transfert et la mise à disposition des destinataires des e-mail recommandés et le retour soit de l'Accusé de réception, soit de l'Accusé de Mise à disposition.
   L'Autorité de certification, qu'elle soit de droit privé ou public, présente pour le service de recommandation des garanties de fiabilité en général et en particulier en employant du personnel qualifié et expérimenté tant au niveau de la gestion, de la technologie et de la cryptographie des signatures électronique, des certificats qualifiés simple et double et des procédures de sécurité appropriées, en appliquant des procédures et méthodes administratives de gestion conformes à des normes reconnues, en assurant un service d'annuaire, un service d'archivage à disposition de la justice ou sur demande des usagers concernés (expéditeur et destinataire) et un service de révocation, en vérifiant l'identité des Usagers, en veillant à prendre des mesures contre la contrefaçon, en veillant à la confidentialité des informations recueillies, en disposant de ressources financières et assurances dommages suffisantes, notamment au regard de la responsabilité liée au service de recommandation vis à vis des Usagers, en enregistrant les informations pertinentes concernant la preuve produite afin de les conserver à disposition de la justice et des Usagers concernés, en prenant soin d'informer les Usagers par un moyen de communication durable des modalités et conditions d'utilisation du service de recommandation, et, en utilisant des systèmes fiables pour stocker les certificats délivrés sous une forme vérifiable, de sorte que seules les personnes autorisées puissent introduire et modifier des données, que l'information puisse être contrôlée quant à son authenticité, que les certificats ne soient disponibles au public qu'en cas de consentement du titulaire et que toute modification mettant en péril ces exigences de sécurité soit apparente pour l'opérateur.
Certificat qualifié simple, double, public) :
   Simple : désigne attestation électronique qui lie des données afférentes à la vérification de signature électronique avancée à une personne, confirme l'identité de cette personne et le lien entre la signature et l'écrit auquel elle est rattachée.
   Double : propre au présent procédé de recommandation, désigne le certificat qualifié d'une Autorité de certification portant sur deux signatures électroniques avancées (voir Signatures d'identité), plus particulièrement celles de l'Expéditeur et celle du Destinataire, rattachées à un même ensemble d'écrit composé particulièrement : (1) d'un écrit électronique et/ou des fichiers informatiques, (2) d'une convention de preuve liant les parties sur ce mode probatoire (voir Conditions d'Usages) et (3) des conditions de transmission de cet ensemble. Techniquement, l'Autorité génère deux attestations sous forme de Certificats qualifiés simple, selon les techniques existantes les plus performantes à cette fin, leur réunion selon le présent procédé de preuve formant le Double certificat qualifié.
   Public : désigne les certificats simples ou doubles, mais émis dans le cadre d'une mission de service public.
Conditions d'usage : désigne les règles de fonctionnement du service de recommandation, contenant une convention de preuve, que tous les Usagers se doivent d'accepter et respecter pour obtenir et conserver la qualité d'Usager, ainsi que pour donner plein effet aux instruments générés sur leur demande par le présent procédé de preuve.
   Ces conditions exposent le présent procédé, les garanties apportées par l'Autorité de certification et les engagements auxquels souscrivent les Usagers. Ce contrat contient la convention de preuve que concluent successivement, par l'intermédiaire et sous le contrôle de l'Autorité de certification, l'Expéditeur et le Destinataire lors de la création de leur Signature d'Identité et de l'usage du service recommandation, les parties renonçant irrévocablement à agir en contestation de la parfaite validité des preuves générées par le procédé de recommandation. Elles renoncent notamment à ne pas agir en contestation sous une forme ou sous une autre contre le procédé de recommandation lui-même, ses instruments et produits, dont plus particulièrement les Signatures d'identité, dont celles des parties et celles de leurs futurs correspondants, et les Avis et Accusés délivrés par l'Autorité de certification. Par ailleurs, les parties garantissent l'exactitude des renseignements et informations qu'elles ont fournis à l'Autorité de certification. Enfin, en cas d'acceptation du recommandé postérieurement au délai d'ouverture, le Destinataire reconnaît expressément, par une clause à cet effet insérée dans les Conditions d'usage, la validité de la date de réception au jour de l'Avis de passage rétroactivement.
   Chaque prestation de recommandation constitue une application de cette convention de preuve qui lie les parties et s'impose à l'Autorité judiciaire, notamment en droit français en droit français (article 1316-2 du Code civil).
Délai d'ouverture : désigne le délai de (à titre d'exemple) deux semaines pendant lequel le destinataire peut choisir entre accepter ou refuser l'e-mail recommandé. Ce délai commence à courir à compter de la date d'envoi de l'Avis de Passage au destinataire et s'achevant par l'envoi de l'Avis de Mise à Disposition. A son expiration, le destinataire est présumé avoir eu connaissance de l'e-mail en recommandé depuis l'Avis de passage.
Destinataire : désigne la personne, physique ou morale, recevant un Avis de Passage signé électroniquement de la part de l'Autorité de certification.
   S'il choisit d'accuser réception de l'e-mail recommandé, le Destinataire devient un Usager du service de recommandation lié par une convention de preuve avec l'Expéditeur.
   S'il refuse ou en cas d'absence d'ouverture de l'e-mail recommandé, il sera présumé en avoir eu connaissance après l'expiration du délai d'ouverture, présomption simple établie par l'Accusé de Mise à Disposition consécutif à l'Avis de Mise à Disposition.
Directive : la directive CEE du Parlement et du Conseil *sur un cadre communautaire pour les signatures électroniques* du 13 décembre 1999, n° 1999/93/CE, JOCE 19/01/2000, n° L 13, p. 12.
E-mail recommandé : désigne l'écrit signé électroniquement par l'Expéditeur et transmis au Destinataire par l'Autorité de certification.
Etat : désigne l'autorité souveraine d'un système de droit, notamment en charge de l'authentification publique. Cet Etat peut être un des états membres de l'Union Européenne appliquant la Directive ou un état hors CEE lié par un traité de reconnaissance en la matière ou son équivalent. l'Etat s'entend tant de l'administration publique que et des collectivités locales ou équivalent qui le compose.
Expéditeur : désigne la personne, physique ou morale, auteur d'un e-mail recommandé, recourant au service de recommandation.
Mise à disposition : désigne la présomption qui pèse sur le Destinataire après l'envoi de l'Avis de Mise à disposition et rétroactivement à compter de l'Avis de Passage, selon laquelle celui-ci est réputé avoir eu connaissance de l'e-mail recommandé, donnant ainsi effet aux écrits qu'il contient. Pour ce faire, l'Autorité de certification garantit avoir mis en oeuvre tous les moyens adéquats pour informer le Destinataire de ce qu'un e-mail recommandé lui est destiné et qu'il doit l'accepter juridiquement au moyen de sa signature électronique avancée, crée gratuitement et l'identifiant individuellement, pour ouvrir l'e-mail recommandé. En tout état de cause, l'écrit en recommandé reste à sa disposition et peut toujours être accepté et ouvert après le Délai d'ouverture, mais sous condition de reconnaître expressément la validité de la date de réception au jour de l'Avis de passage.
   Valeur juridique : présomption simple de connaissance de l'e-mail recommandé pouvant être combattue par la preuve contraire. Cette présomption est matérialisée par l'Accusé de Mise à Disposition valant preuve littérale en droit français et certificat qualifié en droit communautaire.
Recommandation : désigne le service offert par présent procédé, celui-ci pouvant être privé ou publique en fonction de la nature et des fonctions de l'Autorité de certification.
Révocation : désigne le processus mettant fin à la validité d'une signature électronique, dissociant l'Usager de sa Signature d'identité. Les Signatures d'identité révoquées ne sont plus garanties par l'Autorité de certification. A l'issue, les actes effectués antérieurement à la révocation grâce à la Signature révoquée restent valables et archivés et engagent l'Usager. Pour l'avenir, la Signature révoquée ne sera pas attribuée à un autre et restera en archives à la disposition de l'Usager qui l'a révoquée, mais sous une forme passive : l'usager ne peut plus s'en servir et la Signature révoquée n'est plus valable pour identifier ledit Usager.
Service de recommandation : désigne la mise en oeuvre du procédé de preuve décrit dans le présent brevet.
Signature d'identité : désigne une donnée sous forme électronique identifiant de façon certaine son titulaire par l'usage d'un procédé sécurisé et fiable d'identification sur lequel le titulaire garde un contrôle exclusif, garantissant son lien avec l'acte auquel elle s'attache par l'usage de dispositifs sécurisés propres à assurer l'intégrité du lien et du contenu de l'acte et à conserver en archives consultables par les Usagers concernés ou par l'Autorité judiciaire pendant la durée de validité de l'acte concerné. Cette signature est propre à chaque individu qui s'engage à en faire un usage exclusivement personnel et à n'en point faire commerce, ainsi qu'à en préserver l'intégrité et la confidentialité à l'égard de tout tiers autre que l'autorité publique de certification ou sur injonction d'une décision de justice. Cette Signature d'identité est intransmissible, que ce soit par libéralité ou par succession, et incessible. Le service de création signature électronique peut être payant ou gratuit sans que la validité en soit atteinte. Toutefois, dans le présent brevet, doit être gratuite la Signature d'identité conférée au Destinataire à la seule fin qu'il puisse accuser réception de l'e-mail recommandé.

Technique et Valeur juridique : la Signature d'identité est infalsifiable, inaltérable, traçable et certifiée par un tiers par l'utilisation de tout moyen technique adéquat. La présente invention ne porte pas sur les signatures électroniques avancées ou les certificats en tant que tels, mais les utilise selon le meilleur état de la technique dès lors qu'elle répond aux critères de validité nationaux ou communautaires. Toutefois, à seul titre d'illustration, ces moyens peuvent être des procédés mathématiques appliqués destinés à protéger la confidentialité et assurer l'authentification des données du message concerné en les remplaçant ou en les transformant en une version modifiée susceptible d'être retransformée en données originales en usant l'algorithme cryptographique et la clef adéquate, l'ensemble visant à dissimuler le contenu des messages, d'empêcher des modifications et d'éviter les usages détournés. Ainsi, en l'état de la technique, sa matérialisation peut être une paire de clefs cryptographiques mathématiquement apparentées, composée d'une partie privée (clé mathématique tenue secrète par l'Usager utilisée pour signer un message électronique et, selon l'algorithme, décrypter messages ou fichiers cryptés avec la clé publique correspondante) et une partie publique (clef mathématique qui peut être rendue publique, et utilisée pour vérifier les signatures électroniques générées à l'aide de la clef privée correspondante ; selon l'algorithme, les clefs publiques peuvent aussi servir à crypter messages ou fichiers qui seront ensuite décryptés avec la clef privée correspondante), avec notamment une fonction de condensation (algorithme organisant ou traduisant un ensemble de bits en un autre de telle façon que (1) un message donne le même résultat chaque fois que algorithme est appliqué au même message, (2) il est mathématiquement impossible de déduire ou de reconstituer le message à partir du résultat de l'application de algorithme, (3) il est mathématiquement impossible de trouver deux messages différents qui produisent le même résultat condensé avec le même algorithme. En tout état de cause, et quelle que soit la technique utilisée pour le présent procédé de preuve, la Signature d'Identité est liée de façon inaltérable aux données recueillies lors de la Création de la Signature d'identité, au numéro de référencement chez l'Autorité de certification et code secret de l'Usager.

Toutefois, l'évolution des techniques, notamment de cryptologie, exclut une normalisation technique qui deviendrait obsolète. Il convient en conséquence de se référer aux exigences posées par les textes suscités qui prennent en considération cette contrainte.

La Directive exige que la signature électronique avancée satisfasse les critères suivants : être liée uniquement au signataire et permettre de l'identifier, être créée par des moyens que le signataire puisse garder sous son contrôle exclusif et être liée aux données auxquelles elle se rapporte de telle sorte que toute modification ultérieure des données soit détectable. Sous ces conditions, les signatures électroniques avancées sont recevables comme preuve en justice sous la responsabilité des Etats-membres, de même que les Signatures d'identité délivrées selon le présent procédé de preuve.

L'article 1316-4 relatif à la signature électronique exige l'usage d'un procédé fiable d'identification garantissant son lien avec l'acte auquel elle s'attache. Un Décret fixera les conditions relatives à la création de la signature, l'identification du signataire et l'intégrité de l'acte accompli permettant de bénéficier d'une présomption simple. En tout état de cause, le pouvoir réglementaire est tenu de respecter les critères posés par la Directive. En conséquence, et indépendamment du contenu du futur Décret dont les conditions seront immédiatement prises en compte, en droit français, une signature électronique remplissant les conditions de la Directive - et par conséquent une Signatures d'identité délivrée dans le cadre du présent procédé de preuve - est recevable en justice.

Création de Signature d'identité : l'Usager doit transmettre les données suivantes, distinctes selon qu'il s'agit d'une personne physique ou morale :
- personne privée : (i) numéro de carte d'identité, de un passeport, de carte de séjour ou de résidant ou de réfugié ou de tout autre numéro identifiant publiquement l'Usager auprès d'un Etat, (ii) son état civil, à savoir nom et prénom, lieu et date de naissance, noms et date et lieu de naissance des parents de l'Usager (facultatif), adresse électronique, adresse et téléphone (facultatif) de domicile, ainsi que le code secret souhaité et la question secrète en cas d'oubli du code (ie : date de naissance d'un ascendant).
- personne morale : (i) dénomination sociale, (ii) forme sociale, capital social et numéro d'immatriculation auprès d'un Etat-membre (N^{o} de RCS auprès du greffe du tribunal de commerce compétent ou équivalent pour les sociétés commerciales), (iii) adresse et téléphone (facultatif) du siège social, (iv) représentant légal, à savoir ses fonctions, qualités et état-civil réduit au nom, prénom et numéro de carte d'identité ou équivalent, ainsi que le code secret souhaité et la question secrète en cas d'oubli du code.

Le contrôle de ces informations est effectué, le cas échéant, par connexion à la banque de données extérieure adéquate.

En cas d'erreur ou d'incompatibilité, l'Usager est invité, par un message d'erreur lui proposant de continuer ou d'arrêter, à saisir une nouvelle fois les données erronées ou incompatibles. Le processus se poursuit jusqu'à abandon ou jusqu'à complète réussite. En ce cas, les informations sont une nouvelles fois vérifiées auprès de la banque de données adéquate.

Ces données recueillies sont garanties par l'Usager comme étant exactes, ce dernier se déclarant expressément seul responsable de leur véracité et déchargeant l'Autorité en cas d'erreur ou de fausseté de toutes les conséquences qui peuvent en découler. Pour ce faire, l'Usager doit valider les informations exposées sur la page.

Après cette validation, l'Usager doit consulter et accepter les Conditions d'Usage. Notamment il s'engage à ne contester ni le procédé de reconunandation, ni ses produits, dont plus particulièrement les Signatures d'identité, dont la sienne et celles de ses futurs correspondants, et les Avis et Accusés rendus par l'Autorité.

Au vu de ces données, des vérifications effectuées et de l'acceptation des Conditions D'usage, l'Autorité de certification crée la Signature d'identité par création de la double clef et demande à l'Usager le code secret souhaité avec validation et sa question secrète.

L'Autorité de certification communique à l'Usager les caractéristiques de sa Signature d'identité, à savoir : numéro de Signature d'Identité, date de création, durée déterminée ou indéterminée et valeur juridique.

Site : le Site désigne celui de l'autorité de certification. Le Site est entièrement sécurisé de façon à respecter une complète confidentialité des informations qui y sont contenues, transmises et conservées en archives.

Usager : désigne les utilisateurs du service de recommandation, qu'il s'agisse de l'Expéditeur ou du Destinataire, dès lors que ce dernier accepte, pour réceptionner l'e-mail recommandé, les Conditions d'usage. La qualité d'Usager suppose la personnalité juridique et la capacité juridique, notamment au regard de la convention de preuve inclue dans les Conditions d'usage.

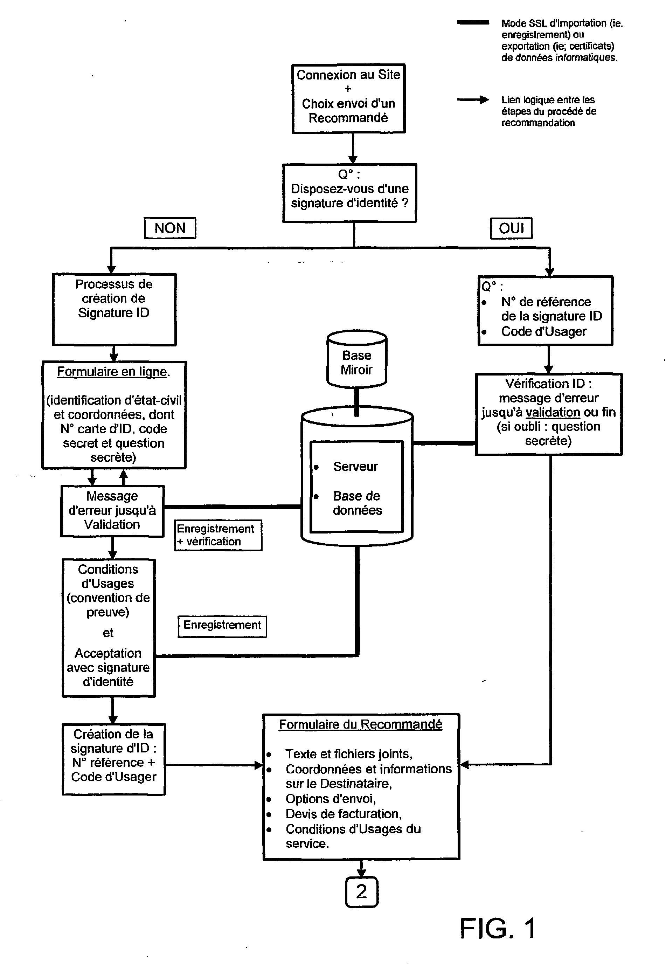

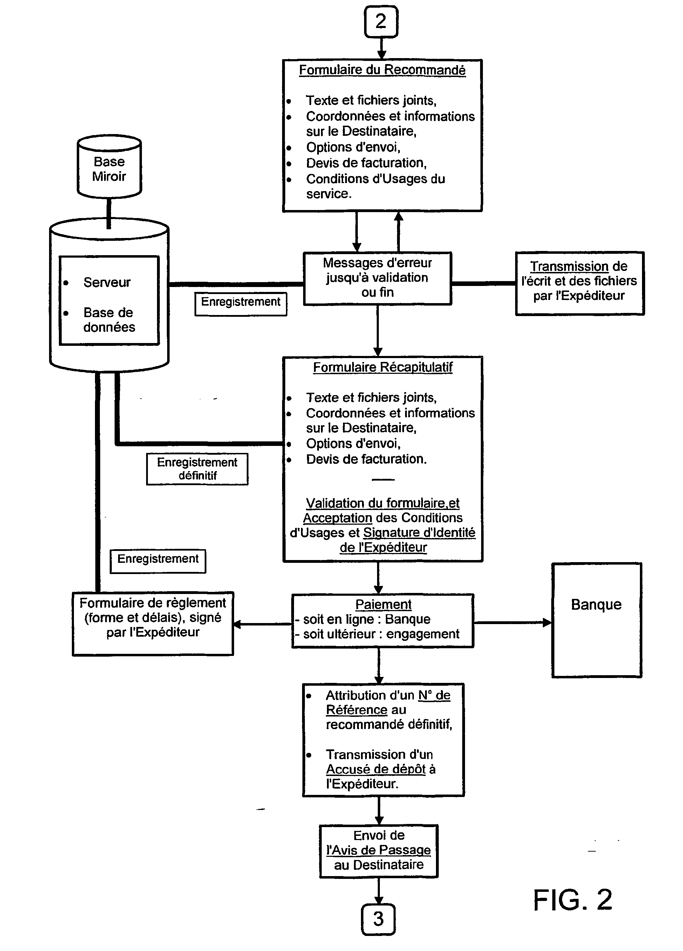

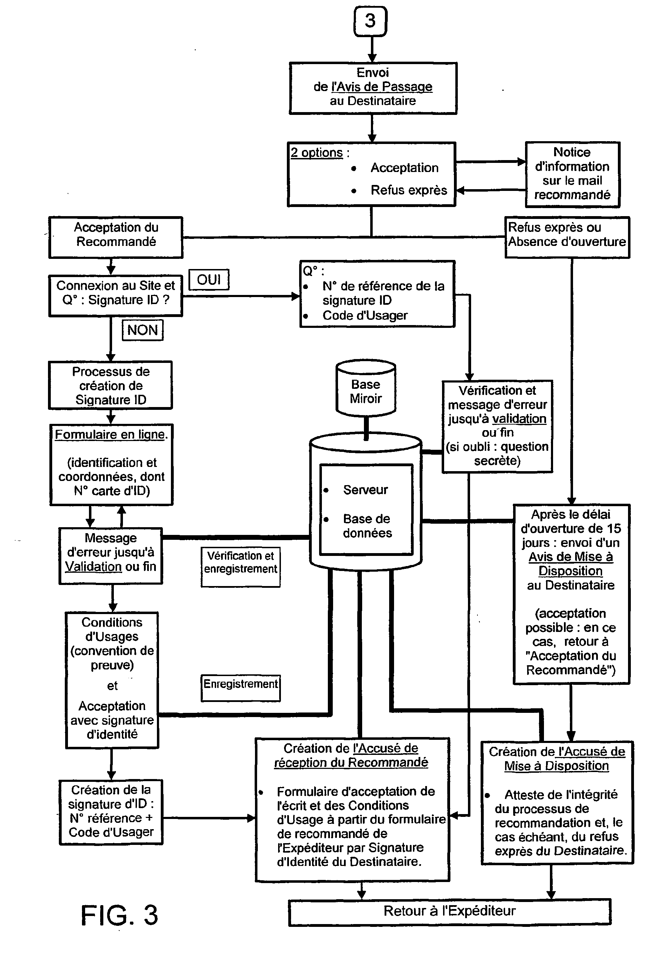

## Revendications

1. Procédé pour générer des preuves relatives à la transmission d'un document électronique entre un expéditeur et un destinataire, équipés d'ordinateurs respectifs ayant tous deux accès à un même réseau de transmission de données, qui comprend
- une étape de transmission du document comportant la transmission en mode sécurisé du document électronique à une autorité de certification également équipée d'un ordinateur relié au réseau de transmission, cette transmission étant effectuée en association avec une adresse électronique du destinataire et une signature électronique identifiant d'une manière certaine l'expéditeur du document, l'expéditeur ayant préalablement adhéré à une convention de preuve par laquelle il renonce à contester la validité de cette signature et des documents générés par ce procédé, munis de cette signature,
ledit procédé étant **caractérisé en ce qu'**il comprend :
- une étape d'archivage effectuée par l'autorité de certification, comportant l'enregistrement de manière sécurisée du document électronique, en association avec la signature électronique de l'expéditeur, l'attribution au document d'un code d'identification, et l'émission à destination de l'expéditeur d'un message électronique d'accusé de dépôt du document contenant le code d'identification attribué au document,
- une étape de transmission d'un message d'avis de passage au destinataire du document, effectuée par l'autorité de certification, cette étape comprenant l'émission au destinataire d'un message électronique d'avis de passage indiquant le code d'identification du document, et que celui-ci est à sa disposition pendant une période de mise à disposition prédéfinie,
- une étape de transmission du document au destinataire par l'autorité de certification, effectuée par l'autorité de certification à la condition d'une acceptation par le destinataire de la réception du document, à la suite de la réception du message d'avis de passage, cette étape comprenant la transmission du document au destinataire, et l'émission à l'expéditeur d'un message d'accusé de réception contenant l'indication que le destinataire a reçu le document, associée à une signature électronique identifiant d'une manière certaine le destinataire et garantissant que le destinataire a accepté de recevoir le document, le destinataire ayant préalablement adhéré à une convention de preuve par laquelle il renonce à contester la validité de cette signature et des documents générés par ce procédé, munis de cette signature, et
- une étape de refus du document, effectuée dans le cas où le destinataire refuse de recevoir le document, ou n'a pas accepté celui-ci à la fin de la période prédéterminée, cette étape comportant l'émission par l'autorité de certification à l'expéditeur d'un avis de mise à disposition du document.

2. Procédé selon la revendication 1,
**caractérisé en ce qu'**il comprend une étape préalable d'attribution à l'expéditeur par l'autorité de certification d'une signature électronique comportant un numéro de pièce d'identité officielle, cette étape comprenant l'adhésion de l'expéditeur à la convention de preuve par laquelle il renonce à contester la validité de cette signature et des documents générés par ce procédé, munis de cette signature, et la mémorisation dans une base de données accessible à l'ordinateur de l'autorité de certification, d'informations d'identification de l'expéditeur et d'un mot de passe propre à l'expéditeur.

3. Procédé selon la revendication 1 ou 2,
**caractérisé en ce que** préalablement à l'acceptation du document transmis par le destinataire, il comprend une étape d'attribution au destinataire par l'autorité de certification d'une signature électronique comportant un numéro de pièce d'identité officielle, cette étape comprenant l'adhésion du destinataire à la convention de preuve par laquelle il renonce à contester la validité de cette signature et des documents générés par ce procédé, munis de cette signature, et la mémorisation dans une base de données accessible à l'ordinateur de l'autorité de certification, d'informations d'identification du destinataire et d'un mot de passe propre au destinataire.

4. Procédé selon l'une quelconque des revendications 1 à 3,
**caractérisé en ce que** le message d'accusé de réception contient en outre le document transmis et le message d'avis de passage avec la signature électronique de l'expéditeur, l'ensemble formant avec la signature du destinataire un double certificat authentifié par l'autorité de certification.

5. Procédé selon l'une quelconque des revendications 1 à 4,
**caractérisé en ce que** le message d'avis de mise à disposition contient une indication permettant de déterminer si le destinataire du document a expressément refusé de recevoir le document ou n'a pas demandé le document durant la période de mise à disposition prédéfinie.

6. Procédé selon l'une quelconque des revendications 1 à 5, **caractérisé en ce que** le document comprend une pluralité de fichiers informatiques de toute taille et contenu, recevant la même authentification.

7. Procédé selon l'une quelconque des revendications 1 à 6 **caractérisé en ce que** le document, ainsi que les messages d'accusé de dépôt, d'avis de passage, d'avis de mise à disposition et d'accusé de réception sont enregistrés de manière non modifiable sur un support inaltérable et durable, ainsi que dans une base de données miroir protégée, non accessible par le réseau de transmission.

8. Procédé selon l'une quelconque des revendications 1 à 7, **caractérisé en ce que** les données transmises par l'expéditeur à l'autorité de certification comprennent des informations saisies sur un formulaire électronique en ligne et des fichiers joints, ce formulaire étant complété par les informations transmises par le destinataire si celui-ci accepte de recevoir le document, l'ensemble formant, avec les signatures électroniques de l'expéditeur et du destinataire, l'accusé de réception.

9. Procédé selon l'une quelconque des revendications 1 à 8, **caractérisé en ce que** les transmissions entre l'expéditeur, l'autorité de certification et le destinataire sont effectuées en mode sécurisé SSL, avec chiffrement de protection contre tout détournement de données.

10. Procédé selon l'une quelconque des revendications 1 à 9, **caractérisé en ce que** le message d'avis de passage est soit anonyme, soit contient le nom de l'expéditeur, et éventuellement un titre du document.

## Claims

1. Method for generating evidence relating to the transmission of an electronic document between a sender and an addressee, who are equipped with respective computers both having access to one and the same data transmission network, which comprises
- a step of transmission of the document comprising the transmission in secure mode of the electronic document to a certification authority also equipped with a computer linked to the transmission network, this transmission being performed in association with an electronic address of the addressee and an electronic signature identifying in a definite manner the sender of the document, the sender having previously adhered to an agreement of evidence through which he waives any dispute as to the validity of this signature and of the documents generated by this method, furnished with this signature,
- the said method being **characterized in that** it comprises:
- a step of archiving performed by the certification authority, comprising the secure recording of the electronic document, in association with the electronic signature of the sender, the allocating to the document of an identification code, and the despatching to the sender of an electronic message of acknowledgement of filing of the document containing the identification code allocated to the document,
- a step of transmission of a message of advice of transit to the addressee of the document, performed by the certification authority, this step comprising the despatching to the addressee of an electronic message of advice of transit indicating the identification code of the document, and that the latter is available thereto for a predefined period of making available,
- a step of transmission of the document to the addressee by the certification authority, performed by the certification authority on condition of acceptance by the addressee of the receipt of the document, following the receipt of the transit advice message, this step comprising the transmission of the document to the addressee, and the despatching to the sender of an acknowledgement of receipt message containing the indication that the addressee has received the document, and associated with an electronic signature identifying in a definite manner the addressee and guaranteeing that the addressee has consented to receive the document, the addressee having previously adhered to an agreement of evidence through which he waives any dispute as to the validity of this signature and of the documents generated by this method, furnished with this signature, and
- a step of refusal of the document, performed in the case where the addressee refuses to receive the document, or has not accepted the latter at the end of the predetermined period, this step comprising the despatching by the certification authority to the sender of an advice of making available of the document.

2. Method according to Claim 1,
**characterized in that** it comprises a prior step of allocation to the sender by the certification authority of an electronic signature comprising an official identity item number, this step comprising the adherence of the sender to the agreement of evidence through which he waives any dispute as to the validity of this signature and of the documents generated by this method, furnished with this signature, and the storing in a database accessible to the computer of the certification authority, of identification information of the sender and of a password specific to the sender.

3. Method according to Claim 1 or 2,
**characterized in that** prior to the acceptance of the document transmitted by the addressee, it comprises a step of allocation to the addressee by the certification authority of an electronic signature comprising an official identity item number, this step comprising the adherence of the addressee to the agreement of evidence through which he waives any dispute as to the validity of this signature and of the documents generated by this method, furnished with this signature, and the storing in a database accessible to the computer of the certification authority, of identification information of the addressee and of a password specific to the addressee.

4. Method according to any one of Claims 1 to 3,
**characterized in that** the acknowledgement of receipt message furthermore contains the document transmitted and the message of advice of transit with the electronic signature of the sender, the whole forming together with the signature of the addressee a double certificate authenticated by the certification authority.

5. Method according to any one of Claims 1 to 4,
**characterized in that** the message of advice of making available contains an indication making it possible to determine whether the addressee of the document has expressly refused to receive the document or has not requested the document during the predefined period of making available.

6. Method according to any one of Claims 1 to 5,
**characterized in that** the document comprises a plurality of computer files of any size and content, receiving the same authentication.

7. Method according to any one of Claims 1 to 6,
**characterized in that** the document, as well as the messages of acknowledgement of filing, of advice of transit, of advice of making available and of acknowledgement of receipt are recorded in a non-modifiable manner on an unalterable and durable medium, as well as in a protected mirror database, not accessible by the transmission network.

8. Method according to any one of Claims 1 to 7,
**characterized in that** the data transmitted by the sender to the certification authority comprise information entered into an on-line electronic form and attached files, this form being supplemented with the information transmitted by the addressee if the latter consents to receive the document, the whole forming, together with the electronic signatures of the sender and of the addressee, the acknowledgement of receipt.

9. Method according to any one of Claims 1 to 8,
**characterized in that** the transmissions between the sender, the certification authority and the addressee are performed in SSL secure mode, with protective encryption against any misappropriation of data.

10. Method according to any one of Claims 1 to 9,
**characterized in that** the transit advice message is either anonymous, or contains the name of the sender, and possibly a title of the document.

## Patentansprüche

1. Verfahren zur Erzeugung von Beweisen bezüglich der Übertragung eines elektronischen Dokuments zwischen einem Absender und einem Empfänger, die mit Computern ausgestattet sind, die beide Zugriff zum gleichen Datenübertragungsnetz haben, wobei das Verfahren aufweist:
- einen Schritt der Übertragung des Dokuments, der die Übertragung des elektronischen Dokuments im gesicherten Modus an eine Zertifizierungsstelle enthält, die ebenfalls mit einem mit dem Übertragungsnetz verbundenen Computer ausgestattet ist, wobei diese Übertragung zusammen mit einer elektronischen Adresse des Empfängers und einer elektronischen Signatur durchgeführt wird, die den Absender des Dokuments sicher identifiziert, wobei der Absender vorher einer Beweisvereinbarung zugestimmt hat, durch die er darauf verzichtet, die Gültigkeit dieser Signatur und der durch dieses Verfahren erzeugten und mit dieser Signatur versehenen Dokumente anzufechten,
wobei das Verfahren **dadurch gekennzeichnet ist, dass** es aufweist:
- einen von der Zertifizierungsstelle durchgeführten Archivierungsschritt, der die gesicherte Speicherung des elektronischen Dokuments zusammen mit der elektronischen Signatur des Absenders, die Zuteilung eines Identifikationscodes für das Dokument, und das Senden einer elektronischen Hinterlegungsbestätigung an den Absender aufweist, die den dem Dokument zugeteilten Identifikationscode enthält,
- einen Schritt der Übertragung einer Zustellbenachrichtigungsmitteilung an den Empfänger des Dokuments durch die Zertifizierungsstelle,
wobei dieser Schritt das Senden einer elektronischen Zustellbenachrichtigungsmitteilung an den Empfänger aufweist, die den Identifikationscode des Dokuments und zudem anzeigt, dass dieses Dokument ihm während einer vordefinierten Zurverfügungstellungsperiode zur Verfügung steht,
- einen Schritt der Übertragung des Dokuments an den Empfänger durch die Zertifizierungsstelle, der von der Zertifizierungsstelle unter der Bedingung der Annahme des Empfangs des Dokuments durch den Empfänger nach dem Empfang der Zustellbenachrichtigungsmitteilung durchgeführt wird, wobei dieser Schritt die Übertragung des Dokuments an den Empfänger und das Senden einer Empfangsbestätigungsmitteilung an den Absender aufweist, die die Angabe, dass der Empfänger das Dokument empfangen hat, zusammen mit einer elektronischen Signatur enthält, die den Empfänger sicher identifiziert und garantiert, dass der Empfänger den Empfang des Dokuments angenommen hat, wobei der Empfänger vorher einer Beweisvereinbarung zugestimmt hat, durch die er darauf verzichtet, die Gültigkeit dieser Signatur und der von diesem Verfahren erzeugten und mit dieser Signatur versehenen Dokumente anzufechten, und
- einen Schritt der Zurückweisung des Dokuments, der in dem Fall durchgeführt wird, in dem der Empfänger den Empfang des Dokuments verweigert oder dieses am Ende der vorbestimmten Periode nicht angenommen hat, wobei dieser Schritt das Senden einer Benachrichtigung der Zurverfügungstellung des Dokuments von der Zertifizierungsstelle an den Absender enthält.

2. Verfahren nach Anspruch 1, **dadurch gekennzeichnet, dass** es einen vorhergehenden Schritt der Zuteilung einer eine amtliche Ausweisnummer enthaltenden elektronischen Signatur zum Absender durch die Zertifizierungsstelle aufweist, wobei dieser Schritt die Zustimmung des Absenders zur Beweisvereinbarung, durch die er darauf verzichtet, die Gültigkeit dieser Signatur und der durch dieses Verfahren erzeugten, mit dieser Signatur versehenen Dokumente anzufechten, und die Speicherung von Identifikationsinformationen des Absenders und eines dem Absender eigenen Passworts in einer für den Computer der Zertifizierungsstelle zugänglichen Datenbasis enthält.

3. Verfahren nach Anspruch 1 oder 2, **dadurch gekennzeichnet, dass** es vor der Annahme des übertragenen Dokuments durch den Empfänger einen Schritt der Zuteilung einer eine amtliche Ausweisnummer enthaltenden elektronischen Signatur zum Empfänger durch die Zertifizierungsstelle aufweist, wobei dieser Schritt die Zustimmung des Empfängers zur Beweisvereinbarung, durch die er darauf verzichtet, die Gültigkeit dieser Signatur und der durch dieses Verfahren erzeugten, mit dieser Signatur versehenen Dokumente anzufechten, und die Speicherung von Identifikationsinformationen des Empfängers und eines dem Empfänger eigenen Passworts in einer für den Computer der Zertifizierungsstelle zugänglichen Datenbasis aufweist.

4. Verfahren nach einem der Ansprüche 1 bis 3,
**dadurch gekennzeichnet, dass** die Empfangsbestätigungsmitteilung außerdem das übertragene Dokument und die Zustellbenachrichtigungsmitteilung mit der elektronischen Signatur des Absenders enthält, wobei die Einheit zusammen mit der Signatur des Empfängers ein doppeltes Zertifikat darstellt, das von der Zertifizierungsstelle authentifiziert wird.

5. Verfahren nach einem der Ansprüche 1 bis 4, **dadurch gekennzeichnet, dass** die Mitteilung der Zurverfügungstellungsbenachrichtigung eine Angabe enthält, die es ermöglicht zu bestimmen, ob der Empfänger des Dokuments den Empfang des Dokuments ausdrücklich verweigert oder das Dokument während der vordefinierten Zurverfügungstellungsperiode nicht angefordert hat.

6. Verfahren nach einem der Ansprüche 1 bis 5, **dadurch gekennzeichnet, dass** das Dokument mehrere Dateien beliebiger Größe und beliebigen Inhalts enthält, die die gleiche Authentifizierung erhalten.

7. Verfahren nach einem der Ansprüche 1 bis 6, **dadurch gekennzeichnet, dass** das Dokument sowie die Mitteilungen der Hinterlegungsbestätigung, der Zustellbenachrichtigung, der Zurverfügungstellungsbenachrichtigung und der Empfangsbestätigung in nicht veränderbarer Weise auf einem unveränderlichen und dauerhaften Träger sowie in einer geschützten Spiegeldatenbank gespeichert sind, die über das Übertragungsnetz nicht zugänglich ist.

8. Verfahren nach einem der Ansprüche 1 bis 7, **dadurch gekennzeichnet, dass** die vom Absender an die Zertifizierungsstelle übertragenen Daten auf einem elektronischen Online-Formular erfasste Informationen und angehängte Dateien enthalten, wobei dieses Formular durch die vom Empfänger übertragenen Informationen vervollständigt wird, wenn dieser annimmt, das Dokument zu empfangen, wobei die Einheit zusammen mit den elektronischen Signaturen des Absenders und des Empfängers die Empfangsbestätigung bildet.

9. Verfahren nach einem der Ansprüche 1 bis 8, **dadurch gekennzeichnet, dass** die Übertragungen zwischen dem Absender, der Zertifizierungsstelle und dem Empfänger im gesicherten SSL-Modus mit Schutzverschlüsselung gegen jede Datenveruntreuung durchgeführt werden.

10. Verfahren nach einem der Ansprüche 1 bis 9, **dadurch gekennzeichnet, dass** die Zustellbenachrichtigungsmitteilung entweder anonym ist oder den Namen des Absenders und ggf. einen Titel des Dokuments enthält.
